(19) Europäisches Patentamt
European Patent Office
Office européen des brevets

(11) **EP 3 982 179 A1**

(12) **EUROPEAN PATENT APPLICATION**

(43) Date of publication:
**13.04.2022 Bulletin 2022/15**

(21) Application number: **20201395.9**

(22) Date of filing: **12.10.2020**

(51) International Patent Classification (IPC):
**G02B 6/293** (2006.01)    **G02B 6/255** (2006.01)
**G02B 6/26** (2006.01)    **G01D 5/353** (2006.01)

(52) Cooperative Patent Classification (CPC):
**G02B 6/29358; G01D 5/35306; G01D 5/35374;
G02B 6/2552; G02B 6/262;** G02B 2006/12138

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **INESC TEC - Instituto de Engenharia de
Sistemas e Computadores, Tecnologia e Ciência
4200-465 Porto (PT)**

(72) Inventors:
• **Robalinho, Paulo
4200-465 Porto (PT)**
• **Frazão, Orlando
4200-465 Porto (PT)**

(74) Representative: **Harrison, Robert John et al
Sonnenberg Harrison Partnerschaft mbB
Herzogspitalstraße 10a
80331 München (DE)**

(54) **OPTICAL FIBER SENSOR**

(57)    An optical fiber sensor (5) is disclosed. The optical fiber sensor (5) comprises an optical fiber (20, 220, 520) having an optical microstructure (10, 230, 240, 525) at one end (35, 535); a light source (510) generating coherent light beams for propagation along the optical fiber (20, 220, 520); and a spectrum analyzer (570) for analyzing interference between different ones of the coherent light beams in the optical fiber (20, 220, 520). One of the coherent light beams is adapted to be propagated through the optical microstructure (10, 230, 240, 535) and at least another one of the coherent light beams is adapted as a measuring tool.

Fig. 1

**Description**

Abstract

The invention relates to an optical fiber sensor for measuring displacement of an obj ect.

Background of the Invention

In the 1960s, the technology of fiber optics was developed [1]. This technology was used initially to replace the electric coaxial cables for the transmission of signals and information because the attenuation of light in the fiber optic cables is smaller than the attenuation of electrical signals in the electric coaxial cable. The fiber optics cables are much cheaper to produce than the electric coaxial cables. At around the same time, optical fiber sensors were developed. Unlike electronic sensors, the optical fiber sensor is insensitive to the presence of electromagnetic fields and this insensitivity enables the development of solutions to investigate and evaluate the state of micro and nano systems.

The simplest type of the optical fiber sensor that can be is the cleaved fiber tip [2]. This type of optical fiber enables the intensity of light to be measured. If the optical fiber is placed in front of a reflective surface onto which light is shined, then the reflective surface will allow the optical fiber sensor to act also as an interferometer.

It is known that Fiber Bragg Gratings (FBGs) are obtained by manufacturing the optical fiber with a periodically change in the refractive index of the optical fiber core [3]. This change in the refractive index leads to a reflection of light in the optical fiber sensor at a given wavelength. This type of sensor can enable a plurality of the fiber optic sensors to be arranged in series on the same optical fiber. Most of these types of fiber optical sensors are used when the wavelength variation is changed with the physical parameters.

Sensors with Long-Period Fiber Grating (LPGs) allow mode coupling of the propagating light in the optical fiber between the core and the cladding of the optical fiber [4]. The sensors are made with periodic variations of the optical fiber physical characteristics, such as the refractive index or the geometry of the optical fiber. In this type of fiber optical sensor, a given wavelength of light propagates along the surface of the optical fiber allowing greater interaction of the optical fiber sensor with the external environment. The sensors made from LPGs are longer than those with FBGs and therefore easier to produce.

Other structures used as fiber optic sensors are the taper [5] and the microsphere [6]. The taper comprises a narrowing of the optical fiber at one end of the optical fiber such that a large evanescent field is produced which results in greater interaction of the beam of light with the outside environment. The taper is used as an intensity sensor. In addition, the taper allows a decrease of the beam waist which allows its use as optical tweezers that have a great relevance in the area of biology and medicine.

The microsphere comprises a sphere that is produced at the end of the optical fiber, usually using a laser beam or by means of an electric arc. In the literature, the microsphere is described as having a diameter that is greater than the fiber or the microsphere is connected to the fiber by means of a taper where the diameter of this microsphere is higher than the diameter of the taper. This structure has been widely used for the study and implementation of Whisper Gallery Modes (WGM) as a sensor [7].

Furthermore, there are also structures known that are combinations of the previously presented structures such as: a microcantilever that results from the combination of a taper with a microsphere [8] and a curvature sensor that results from the introduction of a microsphere in the middle of a taper [9].

There are currently several interferometric optical sensors available. The sensitivity of the interferometric optical sensors are listed in the table below:

| Sensor Type | Range | Sensitivity |
|---|---|---|
| LPG [10] | 140 $\mu$m | 0.22 nm/$\mu$m |
| FBG [11] | 3.3 mm | 0.62 nm/mm |
| Modal FI [12] | 120 $\mu$m | 1.53 nm/$\mu$m |
| SPR* [13] | 25 $\mu$m | 10.32 nm/$\mu$m |
| Otto-type SPR [14] | 10 nm | 31.45 nm/nm |

All these sensors are used in transmission mode, which means that the practical implementation of this takes up a relatively large amount space. In addition, the sensor needs to be coupled to the system under study.

Summary of the Invention

This document describes a new type of optical fiber structure used as a sensor in which the operation mode uses the so-called Vernier effect. The Vernier effect enables a large increase of sensitivity compared to the displacement sensors known in the art. This optical fiber structure comprises a cleaved fiber and a spherical, conical or cylindrical microstructure that is attached either to the core or to the cladding of the optical fiber in order to divide the light beam and create optical paths.

The envelope has been studied and its fundamental has a maximum sensitivity of (104 $\pm$ 3) nm/$\mu$m. The first harmonic has a sensitivity of (24.7 $\pm$ 0.3) nm/$\mu$m and the second harmonic has a maximum sensitivity of (11.04 $\pm$ 0.01) nm/$\mu$m. These structure can be used for simultaneous measurement of physical parameters.

The sensor described in this document is smaller than the prior art sensors described in the background of the invention. In addition, the sensor does not need to be coupled to the system under study. This means that the sensor enables a non-evasive measurement to the system to have a maximum sensitivity of (104 $\pm$ 3) nm/$\mu$m which is greater than the sensitivity of the sensors known in the art.

Description of the Figures

Fig. 1 shows an outline of the sensor.
Fig. 2 shows the manufacture of the sensor.
Fig. 3 is a flow chart showing the manufacture of the sensor.
Fig. 4 is a flow chart showing the operation of the sensor.
Fig. 5 shows the experimental arrangement.
Fig. 6 is a micrograph of the optical fiber with the microstructure.
Fig. 7 shows a simulation of the Vernier effect with two different cavities.
Fig. 8 shows the reference cavity fringes (i.e. without interference from the variable cavity).
Fig. 9 shows the output optical signal: (A) the spectrum when the fiber is near of the mirror (B) intensity in function of wavelength and the distance between the end of the fiber and the surface of the mirror.
Fig. 10 shows the wavelength shift: (A) envelope wave and (B) carrier wave
Fig. 11 shows an output optical signal: (A) the spectrum when the fiber is near of the mirror (B) intensity in function of wavelength and the distance between the fiber and the surface.
Fig. 12 shows the wavelength shift: (A) envelope wave and (B) carrier wave.
Fig. 13 shows the output optical signal: (A) the spectrum when the fiber is near of the mirror (B) intensity in function of wavelength and the distance between the fiber and the surface.
Fig. 14 shows a wavelength shift: (A) envelope wave and (B) carrier wave.
Fig. 15 shows an output optical signal: (A) spectrum for 400 nm (B) intensity in function of wavelength and the distance between the fiber and the surface.
Fig. 16 shows the wavelength shift of the envelope wave.
Fig. 17 shows (A) a long tip sensor microstructure and (B) the internal cavity spectral fringes.
Fig. 18 shows an output optical signal: (A) the spectrum when the fiber is near the mirror (B) intensity in function of wavelength and the distance between the fiber and the surface.
Fig. 19 shows the wavelength shift for (A) the envelope wave and (B) the carrier wave.
Fig. 20 shows (A) a microsphere microstructure and (B) internal cavity fringes.
Fig. 21 shows an output optical signal: (A) the spectrum when the fiber is near of the mirror (B) intensity in function of wavelength and the distance between the fiber and the surface.
Fig. 22 shows the wavelength shift: (A) envelope wave and (B) carrier wave.
Fig. 23 shows (A) a small drop sensor and (B) the internal cavity fringes.
Fig. 24 shows the output optical signal: (A) the spectrum when the fiber is near of the mirror (B) intensity in function of wavelength and the distance between the fiber and the surface.
Fig. 25 shows the wavelength shift for (A) the envelope wave and (B) the carrier wave.
Fig. 26 shows an application in fiber endoscopy.

Detailed Description of the Invention

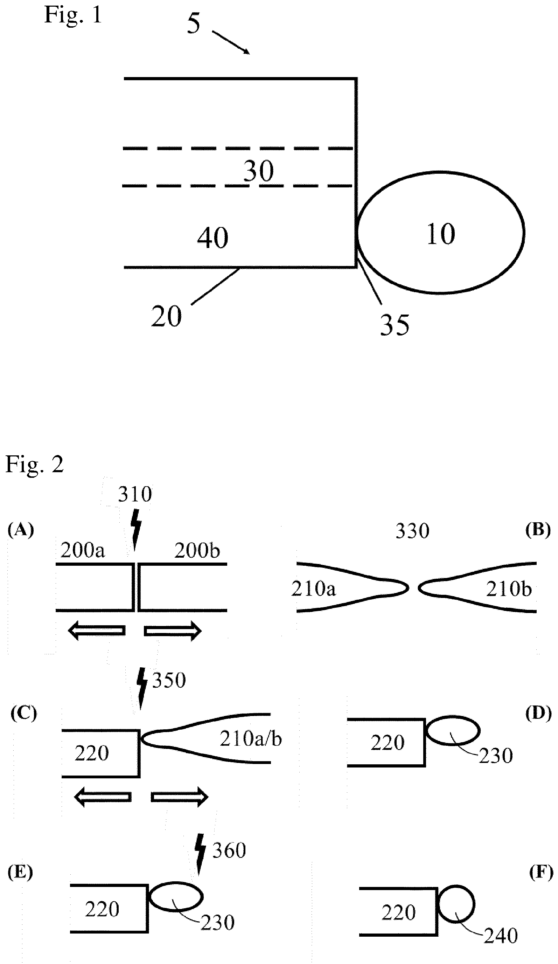

Fig. 1 shows an example of a sensor 5 with an optical microstructure 10 at the end 35 of an optical fiber 20. The optical fiber 20 has a core 30 and cladding 40. The optical microstructure 10 is shown in Fig. 1 as having a spherical geometry, but this is not limiting of the invention and the optical microstructure could be a sphere, an ellipsoid, a hyperboloid, stadium shaped, drop-shaped, tear-shaped, conical, cylindrical, cubic, prisms or microstructures or other forms. The form is not limiting of the invention. The optical microstructure 10 is fused to the end 25 of the optical fiber 20 and is located in any area of this end section 35 and can be fused to the core 30 and/or to the cladding 40.

The operation of this sensor 5 is based on the Vernier effect [15] and will be explained below.

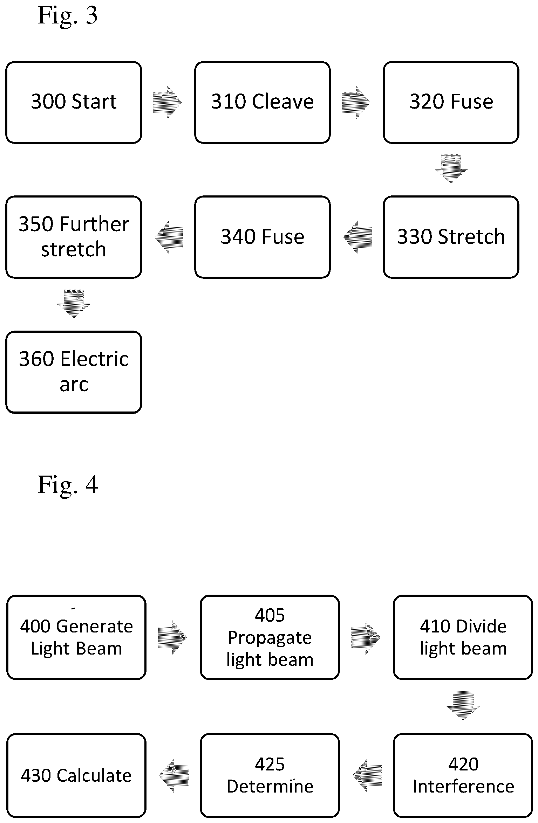

In one non-limiting example, the structure of the sensor 5 was manufactured in standard single mode optical fiber (SMF 28 from Corning Glass) and was spliced using a splice machine "Sumitomo Electric™ Type-72C" (Osaka, Japan). The method of manufacture will now be explained in connection with Fig. 2 and Fig. 3. The manufacture of the sensor 5 begins at 300 and starts with the cleaving in step 310 of the single mode optical fiber to produce two cleaved optical fibers 200a and 200b (as shown in Fig. 2A). These two cleaved optical fibers 200a and 200b are fused in step 320 and, when an electric arc is applied in the splice machine, are stretched in step 330 resulting in two tapers 210a and 210b (as shown in Fig. 2B). The electric power used is 100 a.u. (using values given by manufacturer) and the duration is 10 s.

In a next step 350, one of these tapers 210a or 210b is fused to a (different) cleaved optical fiber 220 and, during the electric arc, the taper 210 is further stretched in step 340 and shown in Fig. 2C. The electric power is 100 a.u. and the duration is 4 s. This results in an optical microstructure 240 at the end 35 of cleaved fiber 220 (shown in Fig. 2D).

Finally, an electric arc is applied in step 360 to the optical microstructure 230 (see Fig. 2E) and results in a microsphere 240 with a diameter less than the diameter of the cleaved optical fiber 220, as can be seen in Fig. 2F. The electric power is 100 a.u. and the duration is 2 s.

The structure and shape of the sensor 5 depends the voltage that is applied, power and duration of electric arc in step 360 as well as the dimension of the tip of the taper 210. The shape can be spherical, cylindrical, conic, or a combination of this geometry.

Having now described the manufacture of the sensor 5, the operating process of the sensor 5 will now be described with respect to Fig. 4. In the first step 400, a light beam will be generated and propagated in step 405 through the optical fiber 20. The light beam is divided into two or more optical paths in step 410. This division can occur at the point of transition of the light beam at the end 35 of the optical fiber 20 from the optical fiber 20 to the air or into the air. Thus, one of the two (or more) optical paths appears inside the microstructure and the other one of the optical paths is in the air.

One of the modes of operation is the reflection operation mode. In this reflection mode of operation, a reversal of the path of the optical beam in the sensor 5 occurs when the optical beam returns to the optical fiber 20. Depending on the use of these microstructures, the cavities can be divided into two types: variable cavities and reference cavities. The reference cavity is formed from the light remaining in the microstructure at the end 35 of the optical fiber 20 and the variable cavity is formed from the light which is reflected from an object back into the end 35 of the optical fiber 20. The interference (step 420) between the light in the two optical paths results in beats in an envelope between the interferences associated with the light beams in each cavity and this can be determined in step 425 to calculate measurement results in step 430. It will be appreciated that this example is described with respect to a single variable cavity, but it would be possible to have further variable cavities for measuring different properties using the same sensor 5.

This phenomenon of the interference between the light beam is named Vernier effect [15] and enables an increase in the sensitivity of the measurements made based on the light path in the variable cavity (or cavities). Some prior art sensors use this Vernier effect to measure temperature and refraction index .

The distance between the sensor 5 of this disclosure and an object can therefore be measured as follows. The sensor 5 has a first cavity (the reference cavity) which is "fixed" and is insensitive to any changes in the displacement of the object and a second cavity (variable cavity) which is sensitive to the displacement. The displacement of the object can then be calculated in step 430 from the overlap of the light beams leading to interference 420 passing through each one of the cavities that result in the Vernier effect.

As is described in the art, Vernier's effect is the beat of interference between the two light beams. This is similar to the beat between two sound waves in which the effect is temporal (i.e. changes over time). Vernier's effect is the beat between optical interference patterns and in this case, the effect is on wavelength.

The Vernier effect will now be explained by determining the spectral frequency associated with the interference fringes from the overlapping light beams through the cavities. The period associated with these interference fringes is determined by the distance between the consecutive maximums of the pattern produced by the interference fringes:

$$\sum_i \beta_i L_i = 2\pi(m + \delta m) \qquad \text{(Eq. 1)}$$

where β is the wavenumber, L the cavity length and m the order of maximum and $\delta m$ is a value between 0 and 1. The index i in this equation 1 refers to the propagation medium through which an optical wave passes.

This gives the following expression:

$$m + \delta m = \frac{\sum_i n_i L_i}{\lambda} \Rightarrow \Delta m = \frac{\sum_i n_i L_i}{\lambda^2} \Delta\lambda \qquad\qquad (Eq. 2)$$

in which $n_i$ is the refractive index of the propagation medium i.
For $\Delta m = 1$,

$$\Delta\lambda = \frac{\lambda^2}{\sum_i n_i L_i} \qquad\qquad (Eq. 3)$$

Thus, the equation describing the fringe resulting from the interference between two optical paths:

$$I = \left( A\cos\left(\frac{\pi}{\lambda}\sum_i n_i L_i\right) + I_0 \right)^2 \qquad\qquad (Eq. 4)$$

Where $I_0$ the difference in intensity of the light beams between the optical paths.
So, the Vernier effect can be written as follows

$$I = \left[ A\cos\left(\frac{\pi}{\lambda}\sum_i n_{1i}L_{1i}\right) + A\cos\left(\frac{\pi}{\lambda}\sum_j n_{2j}L_{2j}\right) + I_0 \right]^2 \qquad\qquad (Eq. 5)$$

Another important issue is to relate the movement of the extremes, i.e. the maxima and the minima of the envelope (i.e. low frequency component) with the carrier (high frequency component) and with the extremes of the variable cavity spectrum.

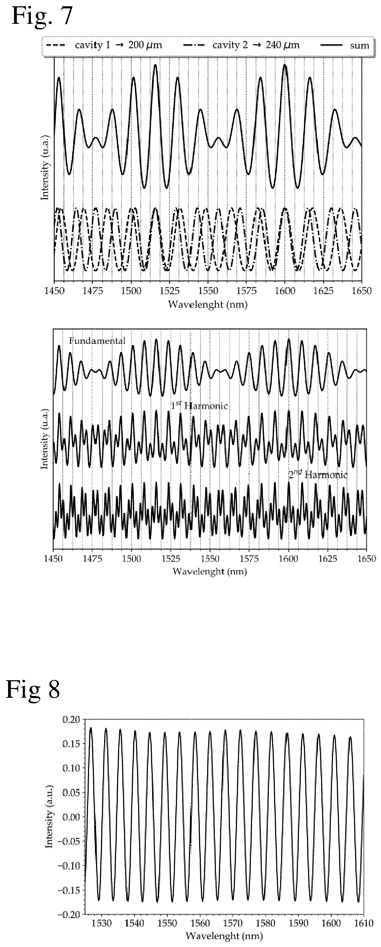

Fig 7 shows a simulation of the Vernier effect with two different cavities. Cavity 1 has a length of 100 um and cavity 2 has a length of 120. It can be seen in Fig. 7 that the maximum of the envelope of the interference pattern between the two light beams occurs when the maxima associated with the light beams passing through each cavity 1 and 2 overlap. This means that, if one of the two cavities has a phase variation of a given $\Delta\phi$, then this phase variation implies that the envelope will also have a phase variation of $\Delta\phi$. Similarly, the carrier will also have a phase difference of $\Delta\phi$.

This system is based on the interferometer of a cleaved tip of the optical fiber 20 with a mirror (acting as the displacement object). The amplification factor M is given by:

$$M = \frac{\Delta\lambda_{env}}{\Delta\lambda_1} \qquad\qquad (Eq. 7)$$

where $\Delta\lambda_{env}$ is the distance between the maxima of the envelope and $\Delta\lambda_1$ is the distance between maxima associated with the variable cavity and $\Delta\lambda_2$ is the distance between the maxima of the reference cavity.
Considering the equations previously presented,

$$\begin{cases} \dfrac{2\pi}{\Delta\lambda_1} - \dfrac{2\pi}{\Delta\lambda_2} = \dfrac{2\cdot 2\pi}{\Delta\lambda_{env}} \\[2mm] \dfrac{2\pi}{\Delta\lambda_1} + \dfrac{2\pi}{\Delta\lambda_2} = \dfrac{2\cdot 2\pi}{\Delta\lambda_{carr}} \end{cases} \Rightarrow \begin{cases} \Delta\lambda_1 = \dfrac{\Delta\lambda_{env}\cdot\Delta\lambda_{carr}}{\Delta\lambda_{env} + \Delta\lambda_{car}} \\[2mm] \Delta\lambda_2 = \dfrac{\Delta\lambda_{env}\cdot\Delta\lambda_{carr}}{\Delta\lambda_{env} - \Delta\lambda_{car}} \end{cases} \qquad\qquad (Eq. 8)$$

Therefore,

$$M = \frac{\Delta\lambda_{env}}{\frac{\Delta\lambda_{env} \cdot \Delta\lambda_{carr}}{\Delta\lambda_{env} + \Delta\lambda_{car}}} = \frac{\Delta\lambda_{env}}{\Delta\lambda_{carr}} + 1 \qquad \text{(Eq. 9)}$$

Whereas for a given $\Delta d$ there is a $2\pi$ phase-shift, then

$$sensitivity = \frac{\Delta\lambda}{\Delta d} \qquad \text{(Eq. 10)}$$

$$\therefore \quad M = \frac{sens_{env}}{sens_{carr}} + 1 \qquad \text{(Eq. 11)}$$

Experimental results

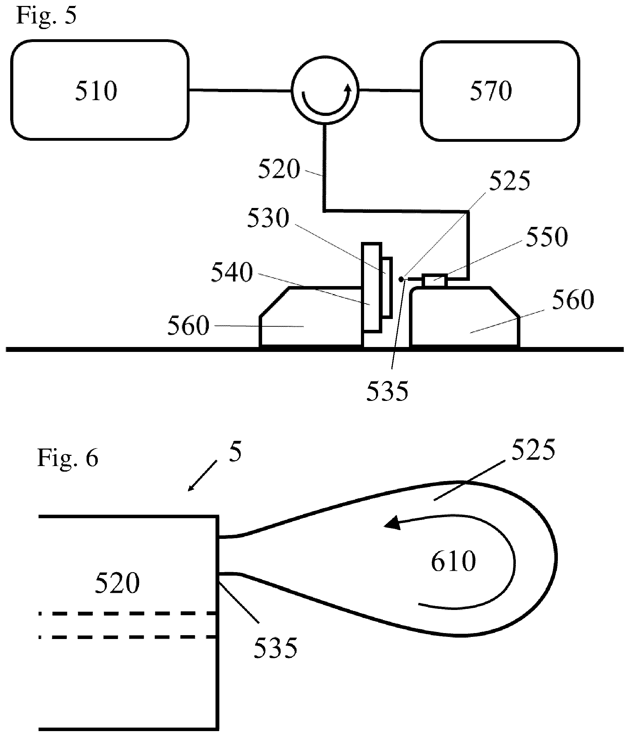

An experimental setup was created and is shown in Fig. 5. The experimental set up comprises an optical light source 510 connected to an optical fiber 520. The optical light source 510 is a broad-spectrum source centered at 1570 nm and has a bandwidth of 90 nm. The microstructure 525 is mounted on the end of the optical fiber 520 and a micrograph of the microstructure 520 is shown in Fig. 6. A reflective surface 530 is coupled to a piezoelectric translation stage 540 which has a variation of (32.8 $\pm$ 0.2) nm/V. The reflective surface 530 corresponds to the displaced object noted above. The optical fiber 520 is mounted on a fiber support 550 which is in turn place on a micrometric translation stage 560 to support and move the optical fiber 520. The optical fiber 520 is connected to an optical spectrum analyzer (OSA) ("Advantest Q8384") 570 which has a resolution of 0.02 nm.

Fig. 6 shows that the sensor 5 has a microstructure 525 connected to the optical fiber 520. This microstructure 525 has a length of 193 $\mu$m and a maximum width of 88 $\mu$m. The junction of the microstructure 525 with an end 535 of the optical fiber 520 has a width of 20 $\mu$m. It will be appreciated that these dimensions are not limiting of the invention.

The reference cavity in Fig. 6 is illustrate by the arrow 610 and comprises the optical path between cleaved optical fiber 520 to the microstructure 525 which has a length of 73 $\mu$m and the path within the microstructure 525 which has a length of 300 $\mu$m. This reference cavity 610 results in interference fringes with a distance between maxima of 5 nm as we can see in the spectrum obtained in the optical spectrum analyzer 570 when the sensor 5 is only surrounded by air, i.e. there is no reflection.

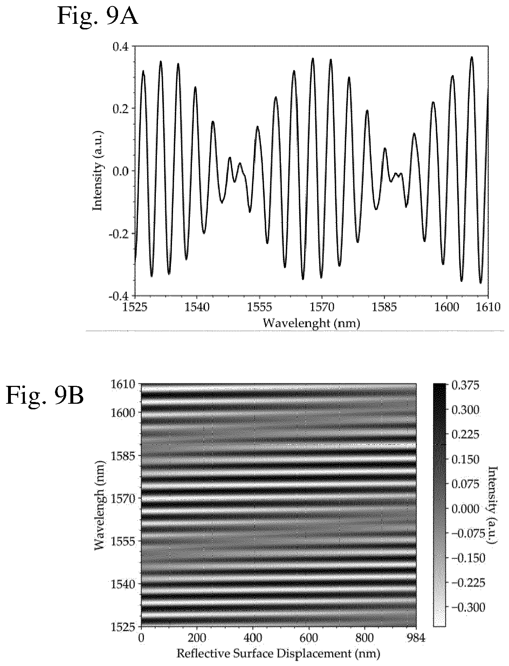

When the size of each of the cavities, i.e. the variable cavity and the reference cavity, is very similar, then this results in a fundamental beat as is shown in Fig. 9. The spectrum shown in Fig. 9A results from placing a mirror in front of the sensor 5 and the spectrum shown in Fig. 9B results from moving the sensor 5 in relation to the mirror. In this spectrum, the fringes' periodicity is less that shown in Fig. 8.

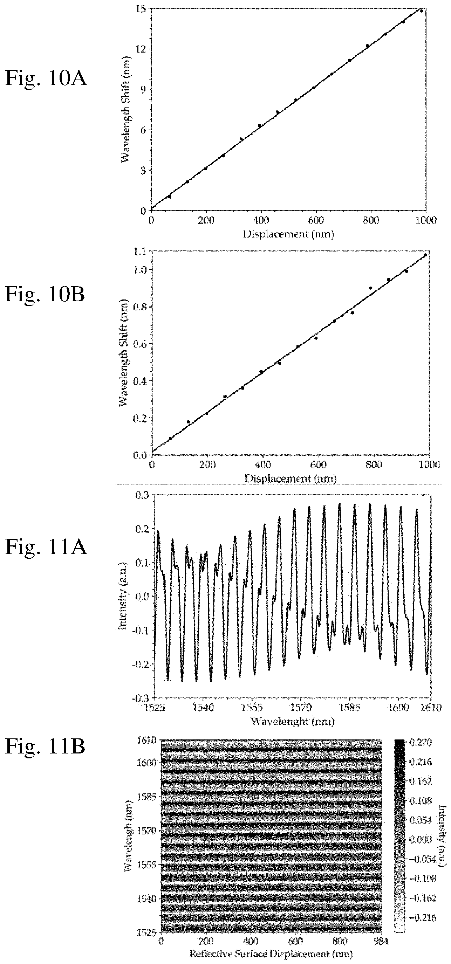

As for the envelope, the linear adjustment has a sensitivity of (15.1 $\pm$ 0.1) nm/$\mu$m and an $r^2$ of 0.9992 (Fig. 10A) in which $r^2$ is the correlation coefficient. As for the carrier, the linear adjustment has a sensitivity of (1.05 $\pm$ 0.01) nm/$\mu$m and an $r^2$ of 0.997 (Fig. 10B). Thus, the M-factor is 15.4.

When a cavity (which in this case is the variable cavity) has a dimension that is approximately twice higher than the other cavity (which in this case is the reference cavity), a first harmonic is generated. Fig. 11A results from placing a mirror in front of the sensor 5 and Fig. 11B results from moving the sensor 5 in relation to the mirror.

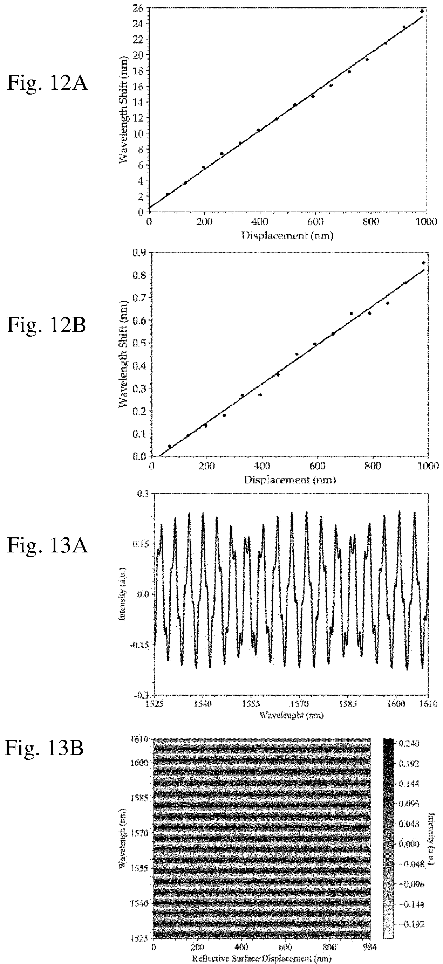

As for the envelope, the linear adjustment has a sensitivity of (24.7 $\pm$ 0.3) nm/$\mu$m and an $r^2$ of 0.997 (Fig. 12A). As for the carrier, the linear adjustment has a sensitivity of (0.86 $\pm$ 0.02) nm/$\mu$m and an $r^2$ of 0.993 (Fig. 12B). Thus, the M-factor is 31.9.

When a cavity (which in this case is the variable cavity) has a dimension that is approximately three times higher than the other cavity (which in this case is the reference cavity), the second harmonic is generated. Fig. 13A results from placing a mirror in front of the sensor 5 and Fig. 13B results from moving the sensor 5 in relation to the mirror.

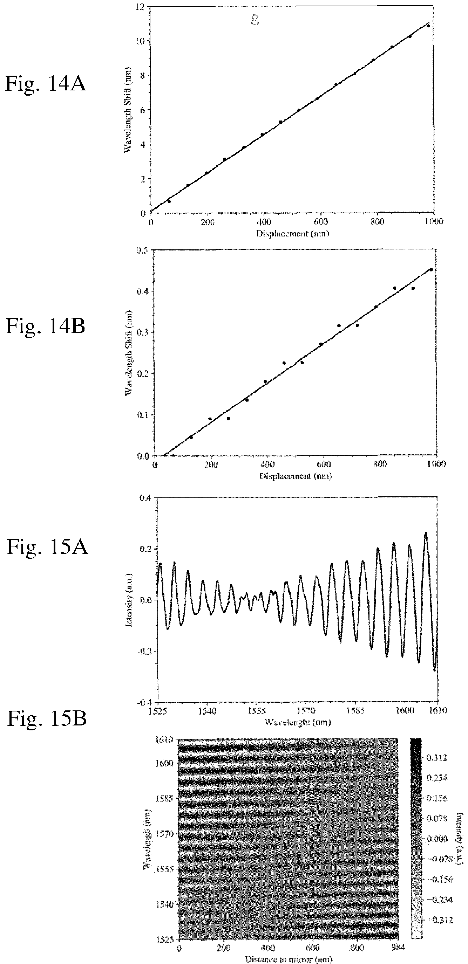

As for the envelope, the linear adjustment has a sensitivity of (11.04 $\pm$ 0.01) nm/$\mu$m and an $r^2$ of 0.9993 (Fig. 14A). As for the carrier, the linear adjustment has a sensitivity of (0.47 $\pm$ 0.01) nm/$\mu$m and an $r^2$ of 0.992 (Fig. 14B). Thus, the M-factor is 24.5.

The best performance was obtained in the fundamental when the optical length of the variable cavity is very close to the optical length of the reference cavity. Fig. 15A results from placing a mirror in front of the sensor and Fig. 15B results from moving the sensor in relation to the mirror. In this spectrum is visible the beat between two interferences originating the Vernier effect. An envelope and a carrier emerge.

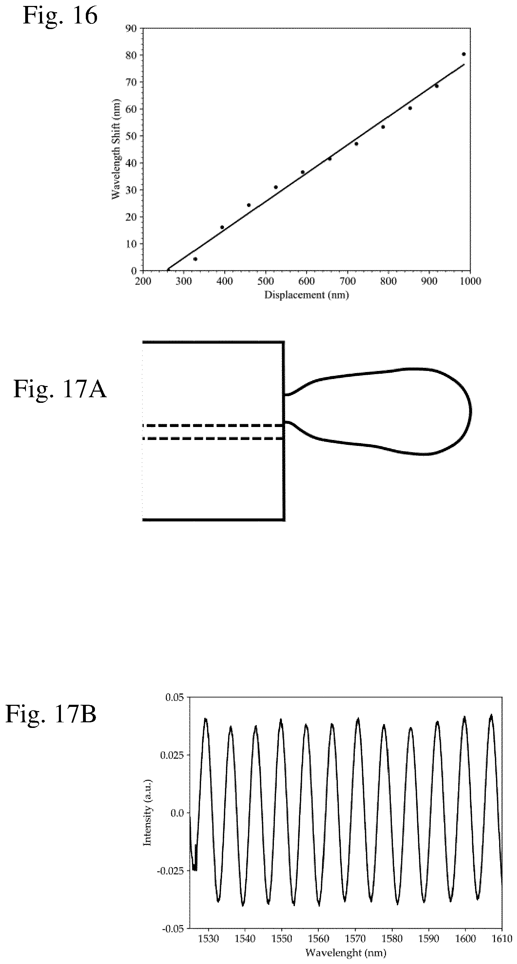

As for the envelope, the linear adjustment has a sensitivity of (104 $\pm$ 3) nm/$\mu$m and an $r^2$ of 0.991 (Fig. 16) and the M-factor is 73.7.

**Examples**

Fig. 17A shows a long tip sensor. This microstructure has a length of 127 $\mu$m and a maximum width of 61 $\mu$m where the junction with the optical fiber has a width of 12 $\mu$m.

This long tip sensor uses the beat between due to the interference of the light beams passing through two cavities. The reference cavity comprises the optical path between the cleaved fiber to the microstructure which has a length of 63 $\mu$m and the path within the microstructure which has a length of 182 $\mu$m. This results in fringes with a distance between maximums of 7.5 nm as we can see in the spectrum obtained when the sensor is only surrounded by air (Fig. 17B).

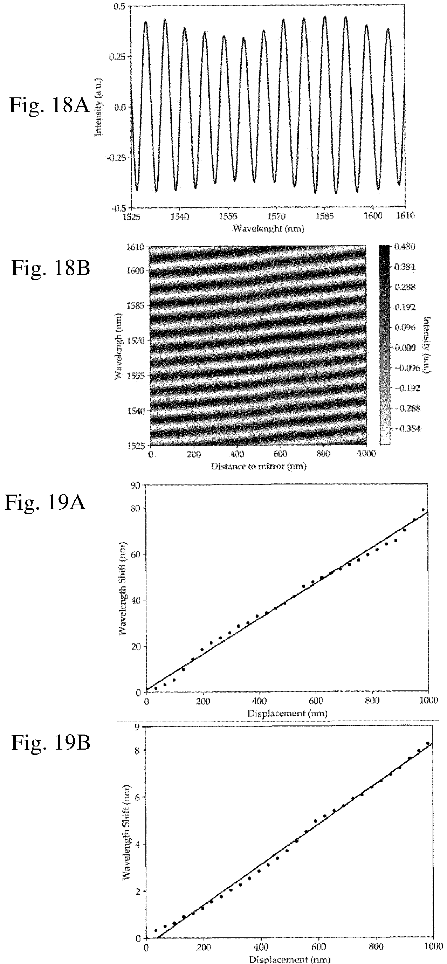

Fig. 18A results from placing a mirror in front of the long tip sensor and Fig. 18B results from moving the sensor 5 in relation to the mirror. In this spectrum is visible the beat between two interferences resulting from the Vernier effect. These light beams associated with these two cavities have different intensities. An envelope and a carrier emerge.

As for the envelope, the linear adjustment has a sensitivity of $(76.5 \pm 0.1)$ nm and an $r^2$ of 0.993 (Fig. 19A). As for the carrier, the linear adjustment has a sensitivity of $(8.6 \pm 0.1)$ and an $r^2$ of 0.996 (Fig. 19B). Thus, the M-factor is 9.9.

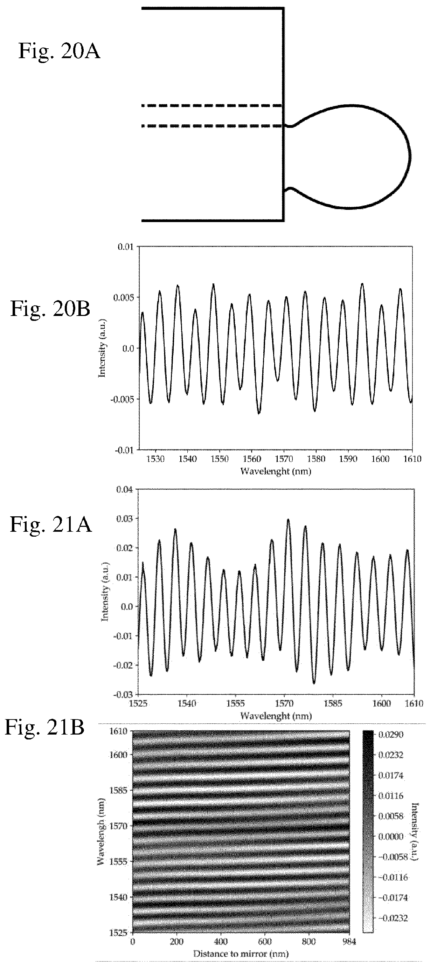

Fig. 20A shows a microsphere sensor which has a length of 69 $\mu$m and a maximum width of 59 $\mu$m where the junction with the optical fiber has a width of 34 $\mu$m.

This microsphere sensor consists of the beat between two cavities. The reference cavity consisting of the optical path between cleaved fiber to the microstructure which has a length of 40 $\mu$m and the path within the microstructure which has a length of 155 $\mu$m. This results in fringes with a distance between maximums of 9 nm as we can see in the spectrum obtained when the sensor is only surrounded by air (Fig. 20B).

Fig. 21A results from placing a mirror in front of the sensor and Fig. 21B results from moving the sensor in relation to the mirror. In this spectrum is visible the beat between two interferences resulting the Vernier effect. These light beams associated with these two cavities have different intensities. An envelope and a carrier emerge.

As for the envelope, the linear adjustment has a sensitivity of $(28.0 \pm 0.6)$ nm and an $r^2$ of 0.993 (Fig. 19.A). As for the carrier, the linear adjustment has a sensitivity of $(2.87 \pm 0.06)$ and an $r^2$ of 0.993 (Fig. 19.B). Thus, the M-factor is 10.8.

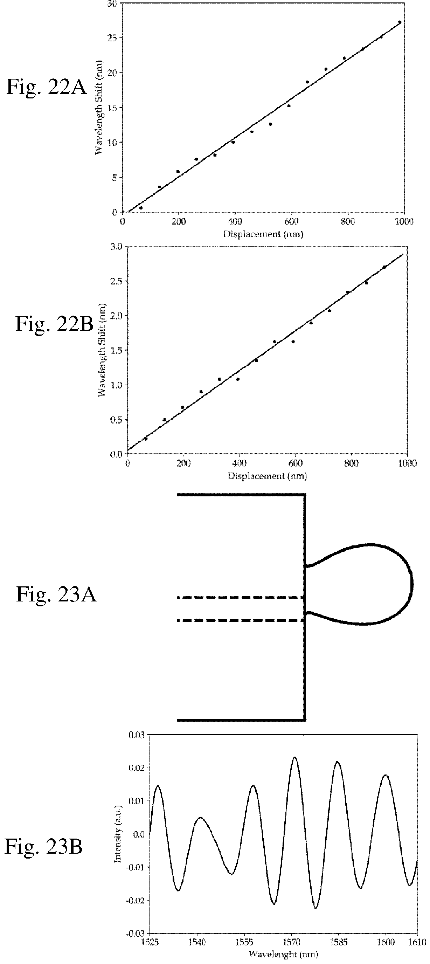

Fig. 23A shows a small drop sensor with a length of 57 $\mu$m and a maximum width of 41 $\mu$m where the junction with the optical fiber has a width of 23 $\mu$m.

This small drop sensor consists of the beat between two cavities. The reference cavity consisting of the optical path within the microstructure which has a length of 120 $\mu$m. This results in fringes with a distance between maximums of 14 nm as we can see in the spectrum obtained when the sensor is only surrounded by air (Fig. 20.B).

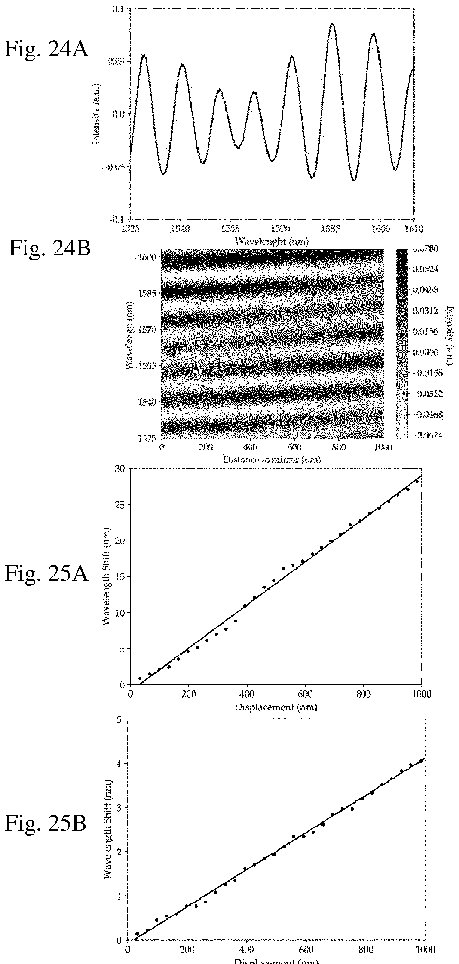

Fig. 24A results from placing a mirror in front of the sensor and Fig. 24B results from moving the sensor in relation to the mirror. In this spectrum is visible the beat between two interferences resulting the Vernier effect. These light beams associated with these two cavities have different intensities. An envelope and a carrier emerge.

As for the envelope, the linear adjustment has a sensitivity of $(29.9 \pm 0.4)$ nm and an $r^2$ of 0.996 (Fig. 25A). As for the carrier, the linear adjustment has a sensitivity of $(4.20 \pm 0.04)$ and an $r^2$ of 0.997 (Fig. 25B). Thus, the M-factor is 8.1.

This document shows that this type of sensors allows the determination of nanometric displacements in micrometric ranges. A maximum sensitivity of $(104 \pm 3)$ nm/$\mu$m with M-factor of 73.7 was obtained for the envelope's fundamental, for the first harmonic $(24.7 \pm 0.3)$ nm/$\mu$m with M-factor of 31.9 and for the second harmonic $(11.04 \pm 0.01)$ nm/$\mu$m with M-factor of 24.5.

In addition, if the reflecting surface is flexible, it can easily measure the forces applied to the system. Decreasing the size of the reference cavity will lead to an increase in the fringes of the surroundings which will lead to an increase in sensitivity. This increase will allow this sensor to determine molecular oscillations. Furthermore, if the distance between the microstructure and the reflecting surface on the object is constant, so this microstructure is a refractive index sensor as well as if this surface is replaced by another fiber with optical mode coupling.

The optical fiber sensor 5 of this document can be used in the following applications.

This optical fiber sensor 5 can determine the distance between the tip of the optical fiber sensor 5 and a reflecting surface (and thus used as a displacement sensor). The optical fiber sensor 5 find applications in fiber endoscopy namely in spectroscopy technics and atomic force microscopy (AFM) technology. This enables non-contact measurement.

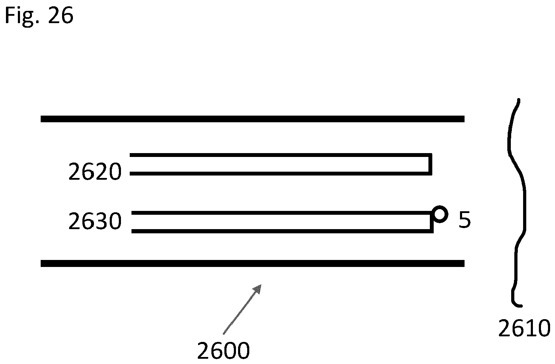

Fig. 26 shows an application in fiber endoscopy. This structure is located at the end of an endoscope 2600 to enhance the resolution of the endoscope 2600. The endoscope 2600 has two optical fibers 2620 and 2630 in this example. The first optical fiber 2620 is, for example, a plastic optical fiber carrying light in the visible wavelength and used for imaging. The second optical fibers 2630 carries light in the infra-red region and is use as the optical fiber sensor 5 to determine the displacement of a tissue surface 2610 and thus allow the assessment of the existence of lesions in the tissue surface at an early stage without the need of extraction of the lesions. In addition, as the intensity of the envelope is given by twice the intensity of the interferometer with less intensity, then it will allow different tissue to be distinguished. The different types of tissues have different intensities of the reflected beam and his configuration increases the resolution of the positioning of the endoscope thus allowing an improved discrimination between malignant and benign regions of the tissues.

It will be appreciated that the first optical fiber 2620 could also be made of a material suitable as a medium for infra-red light.

In AFM, since the optical fiber sensor 5 is insensitive to electromagnetic fields and allows non-evasive measurements, the optical fiber sensor will enable the analysis of the surface shape of thin films as well as soft surfaces and the liquid surface. In addition, the optical fiber sensor 5 allows a real-time analysis allowing temporal measurements of dynamic microsystems with high applicability in the field of biology and medicine. If this optical fiber sensor 5 be coupled to a metal rod, the optical fiber sensor 5 will allow the measurement of forces. The application of a tension on the metal rod will generate a curvature in the metal rod. Thus, the tip of the metal rod will move relative to the optical fiber sensor 5. Therefore, measurement of the displacement of the tip of the metal rod will allow the measurement of the force applied to the metal rod.

Reference Numerals

| | |
|---|---|
| 5 | Sensor |
| 10 | Optical microstructure |
| 20 | Optical fiber |
| 30 | Core |
| 35 | End |
| 40 | Cladding |

| | |
|---|---|
| 200a,b | Cleaved optical fibers |
| 210a,b | Tapers |
| 220 | Cleave optical fiber |
| 230 | Optical microstructure |
| 240 | Spherical shape / microsphere |

| | |
|---|---|
| 510 | Light source |
| 520 | Optical cable |
| 525 | Structure |
| 530 | Reflective surface |
| 535 | End |
| 540 | Piezoelectric translation stage |
| 550 | Fiber support |
| 560 | Translation stage |
| 570 | Optical spectrum analyzer |

| | |
|---|---|
| 610 | Reference cavity |

| | |
|---|---|
| 2600 | Endoscope |
| 2610 | Tissue |
| 2620 | Optical Fiber |
| 2630 | Optical Fiber |

**References**

[1] L. T. Krolak, W. P. Siegmund, R. G. Neuhauser, "Fiber Optics - A New Tool in Electronics", SMPTE, 1960, vol. 69, no. 10, doi: 10.5594/J09399

[2] Erwin Maciak, "Low-Coherence Interferometric Fiber Optic Sensor for Humidity Monitoring Based on Nafion® Thin Film†", Sensors 2019, 19(3), 629, doi:10.3390/s19030629

[3] Nobuaki Takahashia, Kazuto Yoshimuraa, Sumio Takahashia, Kazuo Imamurab, "Development of an optical fiber hydrophone with fiber Bragg grating", Ultrasonics, 2000, vol. 38, iss. 1-8, pp. 581-585, doi: 10.1016/S0041-624X(99)00105-5

[4] Meng Jiang, A. Ping Zhang, Yang-Chun Wang, Hwa-Yaw Tam, Sailing He, "Fabrication of a compact reflective long-period grating sensor with a cladding-mode-selective fiber end-face mirror", Optics Express, 2009, vol. 17, no. 20, doi: 10.1364/OE.17.017976

[5] Kai Ni, Tao Li, Limin Hu, Wenwen Qian, Quanyao Zhang, Shangzhong Jin, "Temperature-independent curvature sensor based on tapered photonic crystal fiber interferometer", Optics Communications, 2012, vol. 285,

[6] Marta S. Ferreira, Jose L. Santos, Orlando Frazão, "Silica microspheres array strain sensor", Optics Letters, 2014, vol. 39, iss. 20, pp.5937-5940, doi: 10.1364/OL.39.005937

[7] Jonathan Ward, Oliver Benson, "WGM microresonators: sensing, lasing and fundamental optics with microspheres", Laser Photonics, 2011, rev. 5, no. 4, pp. 553-570, doi: 10.1002/lpor.201000025

[8] Paulo Robalinho, Orlando Frazão, "Micro-Cantilever Displacement Detection Based in Optical Fiber Tip", Sensors 2019, 19, 4826, doi:10.3390/s19224826

[9] Paulo Robalinho, Orlando Frazão, "Fiber Microsphere Coupled in a Taper for a Large Curvature Range", Fibers 2019, 7, 87; doi:10.3390/fib7100087

[10] Liang Qi, Chun-Liu Zhao, Yunpeng Wang, Juan Kang, Zaixuan Zhang, and Shangzhong Jin, Optics Express, 2013, vol. 21, iss. 3, pp. 3193-3200, doi: 10.1364/OE.21.003193

[11] Jun Hong Ng, Xiaoqun Zhou, Xiufeng Yang, Jianzhong Hao, "A simple temperature-insensitive fiber Bragg grating displacement sensor", Optics Communications, 2007, vol. 273, iss. 2, pp. 398-401, doi: 10.1016/j .optcom.2007.01.040

[12] Jinping Chen, Jun Zhou, Xiaocong Yuan, "M-Z Interferometer Constructed by Two S-Bend Fibers for Displacement and Force Measurements", IEEE Photonics Technology Letters, 2014, vol. 26, iss. 8, pp. 837-840, doi: 10.1109/LPT.2014.2308327

[13] Zongda Zhu, Lu Liu, Zhihai Liu, Yu Zhang, Yaxun Zhang, "High-precision micro-displacement optical-fiber sensor based on surface plasmon resonance", Optics Letters, 2017, vol.42, no. 10, doi: 10.1364/OL.42.001982

[14] Xiao-Ming Wang, Chun-Liu Zhao, Yan-Ru Wang, Chang-Yu Shen, Xin-Yong Dong, "A Highly Sensitive Fibre-Optic Nano-Displacement Sensor Based on Surface Plasmon Resonance", Lightwave Technology, 2016, vol. 34, iss. 9, pp. 2324-2330, doi: 10.1109/JLT.2016.2535662

[15] Andre D. Gomes, Marta S. Ferreira, Jörg Bierlich, Jens Kobelke, Manfred Rothhardt, Hartmut Bartelt, Orlando Frazão, "Optical Harmonic Vernier Effect: A New Tool for High Performance Interferometric Fiber Sensors", Sensors, 2019, vol. 19, iss. 24, no. 5431, doi: 10.3390/s19245431

**Claims**

1. An optical fiber sensor (5) comprising:

   an optical fiber (20, 220, 520) having an optical microstructure (10, 230, 240, 525) at one end (35, 535);
   a light source (510) generating coherent light beams for propagation along the optical fiber (20, 220, 520); and
   a spectrum analyzer (570) for analyzing interference between different ones of the coherent light beams in the optical fiber (20, 220, 520);
   wherein one of the coherent light beams is adapted to be propagated through the optical microstructure (10, 230, 240, 535) and at least another one of the coherent light beams is adapted as a measuring tool.

2. The optical fiber sensor (5) of claim 1, wherein the at least another one of the coherent light beams is radiated from the one end (35, 535) of the optical fiber (20, 220, 520) and reflected back into the optical fiber (20, 220,520).

3. The optical fiber sensor (5) of claim 1 or 2, wherein the optical microstructure (20, 230, 240, 525) has at least one of a spherical shape, or a circular shape, or a cylindrical shape or a taper shape.

4. The optical fiber sensor (5) of any of the above claims, wherein the spectrum analyzer (570) is adapted to calculate a measurement value from the maxima and minima of an envelope from the interference between the different ones of the coherent light beams.

5. A method for calculating a measurement value using an optical sensor (5) comprising an optical fiber (20, 220, 520) having an optical microstructure (10, 230, 240, 525) at one end (35, 535), the method comprising:

   - generating of a coherent light beam (400);
   - propagating the coherent light beam (410) along the optical fiber (20, 220, 520);
   - dividing the coherent light beam (410) into at least two light beams, one of the at least two light beams passing through the optical microstructure and the other of the two light beams being employed as a measurement tool; and
   - measuring (420) the interference between the two light beams.

6. The method of claim 5, further comprising determining (425) an envelope of the interference between the two light beams and calculating the measurement value.

7. The method of claim 5 or 6, wherein the other of the two light beams is radiated from the one end (35, 535) from the optical fiber (20, 220, 520) and reflected from an object back into the one end (35, 535) of the optical fiber (20, 220, 520).

8. A method for the manufacture of an optical fiber sensor (5) comprising:

   cleaving (310) an optical fiber (20, 220, 520);
   fusing end (35) of the optical fiber (20, 220, 520);
   applying an electrical arc to the ends (35) of the optical fiber (20, 220, 520) and stretching (330) the optical fiber (20, 220, 520) to form tapers (210a, 210b);
   fusing (350) one of the tapers (210a, 210b) to another end of another optical fiber to create an optical microstructure (230) at the another end.

9. The method of claim 8, further comprising applying (360) a further electric arc to the optical microstructure (230) to create a microsphere (240).

10. Use of the optical fiber sensor (5) according to one of claims 1 to 4 for measuring a distance to a reflective object.

11. The use of claim 10, wherein the reflective object is one of a tissue surface, a thin film, or a metal rod.

12. The use of claim 11, wherein the tissue surface includes a lesion.

13. The use of claim 11, further comprising applying a force to the metal rod and measuring the displacement of the metal rod is to determine the strength of the force.

Fig. 1

Fig. 2

Fig. 3

| | | |
|---|---|---|
| 300 Start | 310 Cleave | 320 Fuse |

| | | |
|---|---|---|
| 350 Further stretch | 340 Fuse | 330 Stretch |

360 Electric arc

Fig. 4

| | | |
|---|---|---|
| 400 Generate Light Beam | 405 Propagate light beam | 410 Divide light beam |

| | | |
|---|---|---|
| 430 Calculate | 425 Determine | 420 Interference |

Fig. 5

510

570

520

525

530

540

550

560

560

535

Fig. 6

5

525

520

610

535

## Fig. 7

## Fig 8

Fig. 9A

Fig. 9B

Fig. 10A

Fig. 10B

Fig. 11A

Fig. 11B

Fig. 12A

Fig. 12B

Fig. 13A

Fig. 13B

Fig. 14A

Fig. 14B

Fig. 15A

Fig. 15B

Fig. 16

Fig. 17A

Fig. 17B

Fig. 18A

Fig. 18B

Fig. 19A

Fig. 19B

Fig. 20A

Fig. 20B

Fig. 21A

Fig. 21B

Fig. 22A

Fig. 22B

Fig. 23A

Fig. 23B

Fig. 24A

Fig. 24B

Fig. 25A

Fig. 25B

Fig. 26

Europäisches
Patentamt

European
Patent Office

Office européen
des brevets

# EUROPEAN SEARCH REPORT

Application Number

EP 20 20 1395

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 7 187 816 B2 (PURDUE RESEARCH FOUNDATION [US]) 6 March 2007 (2007-03-06)<br>* column 3, lines 3-10 *<br>* column 3, lines 31-34 *<br>* figures 1,2A-B,12 *<br>----- | 1-7,<br>10-13<br>8,9 | INV.<br>G02B6/293<br>G02B6/255<br>G02B6/26<br>G01D5/353 |
| X | CN 108 225 657 A (UNIV NANJING POSTS & TELECOMMUNICATIONS)<br>29 June 2018 (2018-06-29)<br>* pages 4-5 *<br>* figures 1,3,4 *<br>----- | 1-7 | |
| X | CN 108 168 449 A (UNIV NORTHWESTERN)<br>15 June 2018 (2018-06-15)<br>* page 5, paragraph 1; figure 1 *<br>----- | 1-3,5,7 | |

TECHNICAL FIELDS
SEARCHED     (IPC)

G02B
G01D

The present search report has been drawn up for all claims

| Place of search | Date of completion of the search | Examiner |
|---|---|---|
| The Hague | 18 March 2021 | Pantelakis, P |

EPO FORM 1503 03.82 (P04C01)

**ANNEX TO THE EUROPEAN SEARCH REPORT
ON EUROPEAN PATENT APPLICATION NO.**

EP 20 20 1395

This annex lists the patent family members relating to the patent documents cited in  the above-mentioned European search report.
The members are as contained in the European Patent Office EDP file on
The European Patent Office is in no way liable for these particulars which are merely given for the purpose of information.

18-03-2021

| Patent document cited in search report | | Publication date | Patent family member(s) | | Publication date |
|---|---|---|---|---|---|
| US 7187816 | B2 | 06-03-2007 | US | 2006126991 A1 | 15-06-2006 |
| | | | WO | 2006065772 A2 | 22-06-2006 |
| CN 108225657 | A | 29-06-2018 | NONE | | |
| CN 108168449 | A | 15-06-2018 | NONE | | |

For more details about this annex : see Official Journal of the European Patent Office, No. 12/82

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **L. T. KROLAK ; W. P. SIEGMUND ; R. G. NEU- HAUSER.** Fiber Optics - A New Tool in Electronics. *SMPTE,* 1960, (10), 69
- **ERWIN MACIAK.** *Low-Coherence Interferometric Fiber Optic Sensor for Humidity Monitoring Based on Nafion® Thin Film†,* 2019, vol. 19 (3), 629
- **NOBUAKI TAKAHASHIA ; KAZUTO YOSHIMURAA ; SUMIO TAKAHASHIA ; KAZUO IMAMURAB.** Development of an optical fiber hydrophone with fiber Bragg grating. *Ultrasonics,* 2000, vol. 38, 581-585
- **MENG JIANG ; A. PING ZHANG ; YANG-CHUN WANG ; HWA-YAW TAM ; SAILING HE.** Fabrication of a compact reflective long-period grating sensor with a cladding-mode-selective fiber end-face mirror. *Optics Express,* 2009, vol. 17 (20
- **KAI NI ; TAO LI ; LIMIN HU ; WENWEN QIAN ; QUANYAO ZHANG ; SHANGZHONG JIN.** Temperature-independent curvature sensor based on tapered photonic crystal fiber interferometer. *Optics Communications,* 2012, vol. 285
- **MARTA S. FERREIRA ; JOSE L. SANTOS ; ORLANDO FRAZÃO.** Silica microspheres array strain sensor. *Optics Letters,* 2014, vol. 39, 5937-5940
- **JONATHAN WARD ; OLIVER BENSON.** WGM microresonators: sensing, lasing and fundamental optics with microspheres. *Laser Photonics,* 2011, vol. 5 (4), 553-570
- **PAULO ROBALINHO ; ORLANDO FRAZÃO.** Micro-Cantilever Displacement Detection Based in Optical Fiber Tip. *Sensors,* 2019, vol. 19, 4826
- **PAULO ROBALINHO ; ORLANDO FRAZÃO.** Fiber Microsphere Coupled in a Taper for a Large Curvature Range. *Fibers,* 2019, vol. 7, 87
- **LIANG QI ; CHUN-LIU ZHAO ; YUNPENG WANG ; JUAN KANG ; ZAIXUAN ZHANG ; SHANGZHONG JIN.** *Optics Express,* 2013, vol. 21, 3193-3200
- **JUN HONG NG ; XIAOQUN ZHOU ; XIUFENG YANG ; JIANZHONG HAO.** A simple temperature-insensitive fiber Bragg grating displacement sensor. *Optics Communications,* 2007, vol. 273, 398-401
- **JINPING CHEN ; JUN ZHOU ; XIAOCONG YUAN.** Z Interferometer Constructed by Two S-Bend Fibers for Displacement and Force Measurements. *IEEE Photonics Technology Letters,* 2014, vol. 26, 837-840
- **ZONGDA ZHU ; LU LIU ; ZHIHAI LIU ; YU ZHANG ; YAXUN ZHANG.** High-precision micro-displacement optical-fiber sensor based on surface plasmon resonance. *Optics Letters,* 2017, vol. 42 (10
- **XIAO-MING WANG ; CHUN-LIU ZHAO ; YAN-RU WANG ; CHANG-YU SHEN ; XIN-YONG DONG.** A Highly Sensitive Fibre-Optic Nano-Displacement Sensor Based on Surface Plasmon Resonance. *Lightwave Technology,* 2016, vol. 34, 2324-2330
- **ANDRE D. GOMES ; MARTA S. FERREIRA ; JÖRG BIERLICH ; JENS KOBELKE ; MANFRED ROTHHARDT ; HARTMUT BARTELT ; ORLANDO FRAZÃO.** Optical Harmonic Vernier Effect: A New Tool for High Performance Interferometric Fiber Sensors. *Sensors,* 2019, vol. 19 (5431